# EUROPEAN PATENT SPECIFICATION

(11) **EP 1 967 403 B1**
(45) Date of publication and mention of the grant of the patent: **15.08.2012**
(21) Application number: 06835141.0
(22) Date of filing: 18.12.2006
(51) Int. Cl.: B60K 1/00

(54) **HYBRID AUTOMOBILE**
HYBRIDAUTO
VOITURE HYBRIDE

(30) Priority: 26.12.2005 JP 2005372594
(43) Date of publication of application: 10.09.2008
(73) Proprietor: Toyota Jidosha Kabushiki Kaisha, Toyota-shi, Aichi 471-8571 (JP)
(72) Inventor: AKIYAMA, Tadashi, Aichi 471-8571 (JP)
(74) Representative: Winter, Brandl, Fürniss, Hübner, Röss, Kaiser, Polte - Partnerschaft
(86) International application number: PCT/JP2006/325681
(87) International publication number: WO 2007/074745

(56) References cited:
- EP-A- 1 049 234
- JP-A- 2000 045 787
- JP-A- 2002 307 956
- JP-A- 2004 082 940
- JP-A- 2004 304 935
- JP-A- 2005 132 257
- US-A1- 2004 163 861
- US-B1- 6 450 275

## Description

### Technical Field

The present invention relates to a hybrid vehicle, and particularly to a hybrid vehicle equipped with a converter generating a voltage for auxiliary machinery.

### Background Art

Attention has been recently focused on a hybrid vehicle as an environmentally friendly vehicle. In addition to the conventional engine, the hybrid vehicle is equipped with a power storage device, an inverter and an electric motor driven by the inverter, as a power source.

In such a hybrid vehicle, a high voltage of several hundreds volts is used to ensure a high output in a power system including the above-mentioned power storage device, inverter and electric motor, and a low voltage such as 12V (14V power supply system) and 36V (42V power supply system) is generally used in an auxiliary machinery system. There is a known vehicle equipped with a DC (Direct Current)/DC converter which lowers the high voltage of the power system to generate the low voltage of the auxiliary machinery system.

Japanese Patent Laying-Open No. 2004-304935 discloses a power control unit (hereinafter referred to as "PCU") in which this DC/DC converter is mounted integrally with an inverter device. This PCU includes an inverter device having an almost rectangular solid shape, a DC/DC converter having an almost rectangular solid shape and integrally joined to the side of the inverter device, and a water jacket formed at the junction between the inverter device and the DC/DC converter.

In this PCU, auxiliary machinery (a reservoir tank, a water pump and the like) connected to the water jacket is disposed on the side of the inverter device and adjacent to the DC/DC converter. This PCU allows the auxiliary machinery to be efficiently arranged within the engine room and also improves the installation efficiency.

However, in the PCU disclosed in Japanese Patent Laying-Open No. 2004-304935, the DC/DC converter is mounted integrally with the inverter device. This causes the PCU to be increased in size to deteriorate the mountability of the PCU.

In the case where the DC/DC converter is disposed separately from the PCU for the purpose of downsizing the PCU, consideration should be given so as to avoid the deterioration of the mountability of other devices caused by the DC/DC converter. In particular, since the hybrid vehicle is also equipped with the conventional engine in addition to the PCU, the electric motor and the power storage device, there are a large number of devices mounted in the hybrid vehicle, which requires full consideration to be given to the mountability of the devices.

EP 1 049 234 A2 shows a drive unit for a hybrid vehicle comprising an internal combustion engine, a motor generator, a power control unit and a converter. Said document teaches to simplify the cooling unit on the side of the drive unit case by using a first coolant cooling the motor and a second coolant cooling the first coolant.

US 2004/0 163861 A discloses a hybrid vehicle according to the preamble of claim 1.

### Disclosure of the Invention

The present invention is directed to solve the above-described problem. An object of the present invention is to provide a hybrid vehicle which aims to downsize the PCU and serves to avoid the deterioration of the mountability of other devices resulting from downsizing.

According to the present invention, a hybrid vehicle includes an internal combustion engine, a motor generator having a rotation shaft mechanically linked to an output shaft of the internal combustion engine, a power control unit controlling the electric power transmitted and received between a power storage device and the motor generator, and a converter converting the voltage level of the electric power supplied from the power storage device to output it to on-vehicle auxiliary machinery. The converter is disposed at the supposed position of an alternator in the internal combustion engine.

In the hybrid vehicle according to the present invention, the motor generator having the rotation shaft mechanically linked to the output shaft of the internal combustion engine is provided, and the motor generator is used to allow the internal combustion engine to be started and the electric power to be generated by the output of the internal combustion engine Consequently, the alternator that is mounted in the conventional engine-powered vehicle is not provided in this hybrid vehicle. In addition, the converter is disposed at the supposed position of the alternator in the internal combustion engine, which allows the converter to be disposed separately from the PCU without additionally providing a space for mounting the converter.

Therefore, according to the hybrid vehicle of the present invention, the PCU can be reduced in size without deteriorating the mountability of the internal combustion engine to be equipped with the converter. Furthermore, disassembly of the PCU is prohibited in the market for safety reasons. If the converter is integrated with the PCU, an entire replacement of the PCU is required in the event of failure of the converter. In contrast, this hybrid vehicle allows only the converter to be repaired or replaced. In addition, the specification of each of the PCU and the converter varies with individual vehicles. If the converter is integrated with the PCU, the type of the PCU is increased. In contrast, this hybrid vehicle allows the increase in the type of the PCU to be restrained.

Preferably, the converter is cooled by a refrigerant cooling the internal combustion engine.

In this hybrid vehicle, the converter is mounted to the internal combustion engine and cooled by the refrigerant cooling the internal combustion engine, which eliminates the need to provide a refrigerant path between the PCU and the converter. Therefore, this hybrid vehicle allows cost reduction and space saving to be achieved accordingly

Preferably, the converter is disposed in proximity to the side of the internal combustion engine opposite to the side from which the output of the internal combustion engine is provided and above a crankshaft of the internal combustion engine in the vertical direction of the vehicle body.

In general, the refrigerant cooling the internal combustion engine is supplied to and discharged from the internal combustion engine through the side opposite to the side from which the output of the internal combustion engine is provided. According to this hybrid vehicle, the converter is disposed in proximity to the side of the internal combustion engine opposite to the side from which the output of the internal combustion engine is provided. This allows the refrigerant to be readily introduced into the converter. Furthermore, according to this hybrid vehicle, the converter is mounted on the relatively upper portion of the internal combustion engine, with the result that rainwater and the like scattered from below the vehicle body can be restrained from spattering on the converter.

Preferably, the converter is disposed, as seen from a radiator cooling the refrigerant, upstream of the internal combustion engine.

In the hybrid vehicle, the refrigerant cooled by the radiator is supplied to the converter before receiving heat from the internal combustion engine having a large heat capacity. Therefore, this hybrid vehicle allows the coolness of the converter to be ensured.

Preferably, the hybrid vehicle further includes an electric-powered pump mounted to the internal combustion engine and circulating the refrigerant in a cooling system through which the refrigerant flows.

In the hybrid vehicle, since the pump circulating the refrigerant includes an electric-powered pump, there is no need to use the output of the internal combustion engine to mechanically drive the pump. Therefore, this hybrid vehicle can eliminate the need of a belt for transmitting the output of the internal combustion engine to the pump, and can also improve the fuel efficiency of the internal combustion engine by reducing the pump loss.

Preferably, the electric-powered pump is driven by the electric power output from the converter.

In the hybrid vehicle, the converter and the electric-powered pump are both mounted to the internal combustion engine, and the electric power is supplied from the converter to the electric-powered pump. Therefore, according to the hybrid vehicle, the electric power line for supplying the electric power to the electric-powered pump can be reduced in length. Also, the output voltage of the converter is raised to thereby allow the electric-powered pump to be reduced in size and improved in efficiency.

Preferably, the hybrid vehicle further includes a compressor for an air conditioner, mounted to the internal combustion engine. The converter is cooled by a refrigerant of the air conditioner.

In this hybrid vehicle, the converter and the compressor for the air conditioner are both mounted to the internal combustion engine. The refrigerant of the air conditioner is flowed through the compressor for the air conditioner. The refrigerant of the air conditioner is lower in temperature than the refrigerant for cooling the internal combustion engine and the PCU, and consequently, is used for cooling the converter. Therefore, according to this hybrid vehicle, the refrigerant of the air conditioner having high cooling performance can be readily introduced into the converter.

Preferably, the compressor for the air conditioner includes an electric-powered compressor.

In this hybrid vehicle, since the compressor for the air conditioner includes the electric-powered compressor, there is no need to use the output of the internal combustion engine to mechanically drive the compressor. Therefore, this hybrid vehicle can eliminate the need of a belt for transmitting the output of the internal combustion engine to the compressor, and can also improve the fuel efficiency of the internal combustion engine by reducing the loss of the output for driving the compressor.

Preferably, the compressor for the air conditioner is driven by the electric power output from the converter.

In this hybrid vehicle, the converter and the compressor for the air conditioner are both mounted to the internal combustion engine, and the electric power is supplied from the converter to the compressor for the air conditioner. Therefore, according to this hybrid vehicle, the electric power line for supplying electric power to the compressor for the air conditioner can be reduced in length. Also, the output voltage of the converter is raised to thereby allow the compressor for the air conditioner to be reduced in size and improved in efficiency.

As described above, according to the present invention, the converter is disposed at the supposed position of the alternator in the internal combustion engine. This allows the PCU to be reduced in size without deteriorating the mountability of the internal combustion engine to be equipped with the converter. Furthermore, the converter is disposed separately from the PCU, to thereby allow only the converter to be repaired or replaced and also allow the increase in the type of the PCU to be restrained.

### Brief Description of the Drawings

Fig. 1 is a functional block diagram schematically showing a configuration of a hybrid vehicle according to a first embodiment of the present invention.
Fig. 2 is a front view of an engine shown in Fig. 1.
Fig. 3 is a side view of the engine shown in Fig. 1.
Fig. 4 is a diagram for illustrating a cooling system of the hybrid vehicle shown in Fig. 1.
Fig. 5 is a diagram for illustrating a cooling system of a hybrid vehicle according to a second embodiment of the present invention.
Fig. 6 is a functional block diagram schematically showing a configuration of a hybrid vehicle according to a third embodiment of the present invention.
Fig. 7 is a front view of an engine shown in Fig. 6.
Fig. 8 is a functional block diagram schematically showing a configuration of a hybrid vehicle according to a fourth embodiment of the present invention.
Fig. 9 is a front view of an engine shown in Fig. 8.
Fig. 10 is a functional block diagram schematically showing a configuration of a hybrid vehicle according to a fifth embodiment of the present invention.
Fig. 11 is a front view of an engine shown in Fig. 10.
Fig. 12 shows a portion of a refrigerant system of an air conditioner mounted in the hybrid vehicle shown in Fig. 10.
Fig. 13 is a functional block diagram schematically showing a configuration of a hybrid vehicle according to a sixth embodiment of the present invention.
Fig. 14 is a front view of an engine shown in Fig. 13.

### Best Modes for Carrying Out the Invention

The embodiments of the present invention will be hereinafter described in detail with reference to the accompanying drawings, in which the same or corresponding components are designated by the same reference characters, and description thereof will not be repeated.

### [First Embodiment]

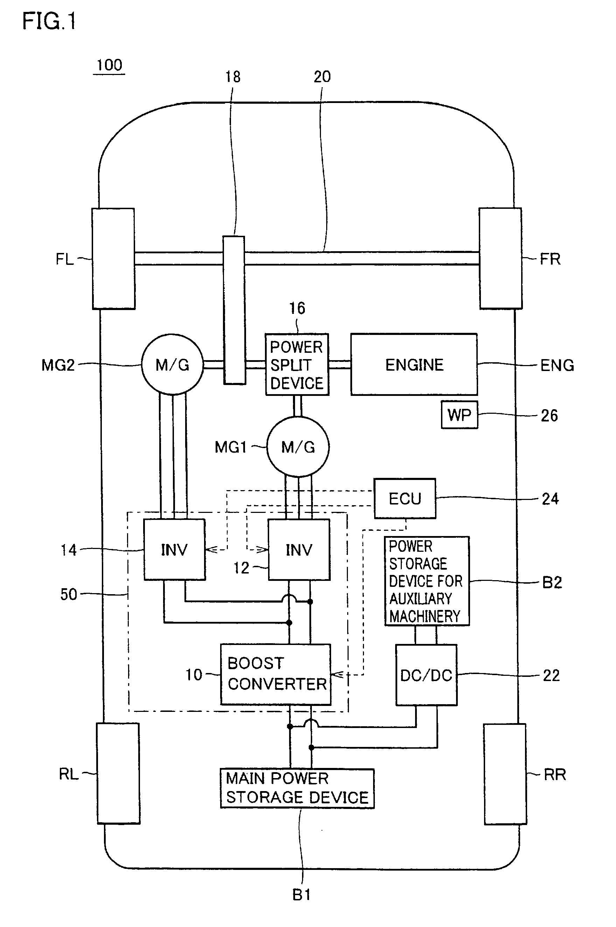

Fig. 1 is a functional block diagram schematically showing a configuration of a hybrid vehicle according to a first embodiment of the present invention. Referring to Fig. 1, a hybrid vehicle 100 includes a main power storage device B1, a power control unit (hereinafter referred to as "PCU") 50, motor generators MG1, MG2, and an electronic control unit (hereinafter referred to as "ECU") 24. Hybrid vehicle 100 further includes an engine ENG, a power split device 16, a reduction gear 18, a drive shaft 20, front wheels FR, FL, and rear wheels RR, RL. Hybrid vehicle 100 further includes a DC/DC converter 22, a power storage device B2 for auxiliary machinery and a water pump 26.

Power split device 16 is linked to engine ENG and motor generators MG1, MG2 to distribute the motive power among them. For example, a planetary gear mechanism having three rotation shafts including a sun gear, a planetary carrier and a ring gear can be used as power split device 16. These three rotation shafts are connected to respective rotation shafts of engine ENG and motor generators MG1, MG2. For example, the crankshaft of engine ENG is passed through the center of a hollow rotor of motor generator MG1, to thereby allow engine ENG and motor generators MG1, MG2 to be mechanically connected to power split device 16.

It is to be noted that the rotation shaft of motor generator MG2 is linked to drive shaft 20 via reduction gear 18. The reduction gear for the rotation shaft of motor generator MG2 may further be incorporated within power split device 16.

Motor generator MG1 is incorporated in hybrid vehicle 100, as a power generator driven by engine ENG and as an electric motor capable of starting engine ENG. Motor generator MG2 is incorporated in hybrid vehicle 100 as an electric motor that drives front wheels FR, FL.

Main power storage device B 1 is connected to PCU 50. Main power storage device B 1 is a chargeable and dischargeable DC power supply and includes a nickelhydrogen or lithium-ion secondary battery, for example. Main power storage device B 1 supplies DC power to PCU 50 and DC/DC converter 22. During electric power generation by motor generator MG1 using the output of engine ENG and during regenerative braking by motor generator MG2, main power storage device B 1 is charged by PCU 50 which receives the generated electric power from motor generators MG1, MG2. It is to be noted that a large-capacity capacitor may be used as main power storage device B 1.

PCU 50 includes a boost converter 10 and inverters 12, 14. Boost converter 10 is connected to main power storage device B 1. Inverters 12, 14 arranged in parallel to each other are connected to boost converter 10. Inverters 12, 14 are also connected via a three-phase cable to motor generators MG1, MG2, respectively.

Based on a control signal from ECU 24, boost converter 10 boosts the DC voltage received from main power storage device B 1 and outputs the boosted voltage to inverters 12, 14. Based on the control signal from ECU 24, boost converter 10 lowers the DC voltage received from inverters 12, 14 to the voltage level of main power storage device B 1 and charges main power storage device B1. Boost converter 10 is, for example, comprised of a voltage step-up and step-down chopper circuit and the like.

Based on the control signal from ECU 24, inverter 12 converts the DC voltage received from boost converter 10 to a three-phase AC (Alternating Current) voltage and outputs the converted three-phase AC voltage to motor generator MG1. Furthermore, inverter 12 converts the three-phase AC voltage generated by motor generator MG1 receiving the output of engine ENG, to a DC voltage based on the control signal from ECU 24, and outputs the converted DC voltage to boost converter 10.

Based on the control signal from ECU 24, inverter 14 converts the DC voltage received from boost converter 10 to a three-phase AC voltage and outputs the converted three-phase AC voltage to motor generator MG2. This causes motor generator MG2 to be driven so as to generate a specified torque. At the time of regenerative braking of the vehicle, inverter 14 also converts the three-phase AC voltage generated by motor generator MG2 receiving rotational force from front wheels FR, FL to a DC voltage based on the control signal from ECU 24, and outputs the converted DC voltage to boost converter 10.

Motor generators MG1, MG2 are three-phase AC electric motors and include, for example, three-phase AC synchronous electric motors. Motor generator MG1 uses the output of engine ENG to generate a three-phase AC voltage, and outputs the generated three-phase AC voltage to inverter 12. Furthermore, motor generator MG1 generates a driving force by the three-phase AC voltage received from inverter 12 and starts engine ENG. Motor generator MG2 generates a vehicle driving torque by the three-phase AC voltage received from inverter 14. At the time of regenerative braking of the vehicle, motor generator MG2 generates a three-phase AC voltage to output the voltage to inverter 14.

ECU 24 generates a control signal for driving each of boost converter 10 and inverters 12, 14, and outputs each of the generated control signals to boost converter 10 and inverters 12, 14.

DC/DC converter 22 arranged in parallel to boost converter 10 is connected to main power storage device B1. DC/DC converter 22 lowers the DC voltage received from main power storage device B 1 or boost converter 10 to the voltage level of the auxiliary machinery system, to charge power storage device B2 for auxiliary machinery. Power storage device B2 for auxiliary machinery is connected to DC/DC converter 22 and supplies the electric power for auxiliary machinery to auxiliary machinery mounted in this hybrid vehicle 100.

Water pump 26 functions as a mechanical pump circulating the cooling water of engine ENG. Water pump 26 is driven by engine ENG during the operation of engine ENG.

In this hybrid vehicle 100, motor generator MG1 uses the output of engine ENG to generate electric power and outputs the generated electric power to inverter 12. Inverter 12 rectifies the electric power from motor generator MG 1 to output it to boost converter 10. Boost converter 10 lowers the voltage level of the electric power from inverter 12 to the voltage level of main power storage device B1 and outputs it to main power storage device B1 and DC/DC converter 22. DC/DC converter 22 lowers the DC voltage received from boost converter 10 or main power storage device B1 to the voltage level of the auxiliary machinery system to charge power storage device B2 for auxiliary machinery.

In other words, in hybrid vehicle 100, the output of engine ENG is used to generate electric power by motor generator MG1, and the generated electric power is used to charge power storage device B2 for auxiliary machinery. Therefore, this hybrid vehicle 100 is not provided with an alternator that is mounted in the conventional vehicle that uses only an engine as a motive power source.

The alternator corresponds to a device which is mounted to the engine in the conventional vehicle and uses the output of the engine to generate electric power and charge the power storage device for auxiliary machinery. In the conventional vehicle, the alternator is disposed in proximity to the side of the engine opposite to the side from which the output of the engine is provided and above the crankshaft of the engine in the vertical direction of the vehicle body.

In hybrid vehicle 100, DC/DC converter 22 is disposed in the vacant space where the alternator which becomes unnecessary has been supposed to be located. That is, DC/DC converter 22 is disposed in engine ENG separately from PCU 50. In engine ENG equipped with DC/DC converter 22, DC/DC converter 22 is disposed in the vacant space where the alternator has been supposed to be located. Therefore, no space for installing DC/DC converter 22 needs to be additionally secured and the space for mounting engine ENG can be limited to the level equal to that of the conventional vehicle.

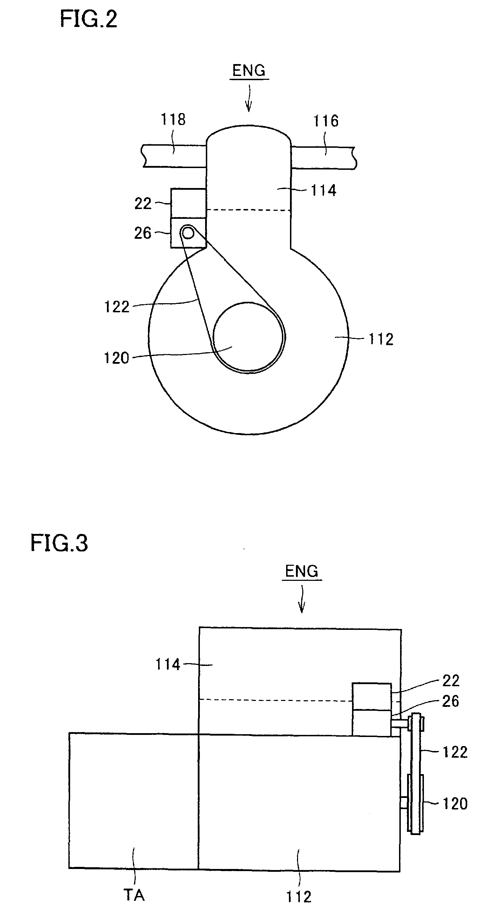

Figs. 2 and 3 each show a diagram for illustrating the state in which DC/DC converter 22 is disposed in engine ENG. Fig. 2 is a front view of engine ENG shown in Fig. 1 (as seen from the direction of the crankshaft of engine ENG), and Fig. 3 is a side view of engine ENG shown in Fig. 1.

Referring to Figs. 2 and 3, engine ENG includes a cylinder block 112, a cylinder head 114, an intake port 116, an exhaust port 118, a pulley 120, and a belt 122. Cylinder head 114 is disposed on cylinder block 112, and intake port 116 and exhaust port 118 are provided in cylinder head 114. It is to be noted that exhaust port 118 is not shown in Fig. 3.

Connected to engine ENG is a transaxle TA including motor generators MG1, MG2, power split device 16 and reduction gear 18. Pulley 120 and belt 122 are provided on the opposite side of transaxle TA across cylinder block 112.

Water pump 26 is disposed in the vicinity of the plane on which pulley 120 is provided in engine ENG and on the upper portion of the side of engine ENG. Water pump 26 is linked via belt 122 to pulley 120 rotating in conjunction with the crankshaft of engine ENG, and uses the output of engine ENG for operation.

DC/DC converter 22 is disposed in the vicinity of water pump 26 and in the vacant space where the alternator which becomes unnecessary in hybrid vehicle 100 has been supposed to be located. That is, in the conventional vehicle, the alternator is disposed in proximity to the side of the engine opposite to the side from which the output of the engine is provided and above the crankshaft of the engine in the vertical direction of the vehicle body, as described above. In the conventional vehicle, the alternator is disposed in the vicinity of the water pump and, together with the water pump, uses the output of the engine for operation. DC/DC converter 22 is disposed in the vacant space where this alternator has been supposed to be located, that is, disposed in proximity to the side of engine ENG opposite, across cylinder block 112, to the side (the transaxle TA side) from which the output of engine ENG is provided, and above the crankshaft of engine ENG in the vertical direction of the vehicle body, and furthermore, in the vicinity of water pump 26.

DC/DC converter 22 is thus disposed in the vacant space where the alternator which becomes unnecessary has been supposed to be located, with the result that the space for mounting engine ENG only needs to be equal to that in the conventional engine-powered vehicle. Furthermore, since DC/DC converter 22 is disposed on the upper portion of the side of engine ENG (at least above the crankshaft of engine ENG), rainwater and the like thrown up from below the vehicle body can be restrained from spattering on DC/DC converter 22.

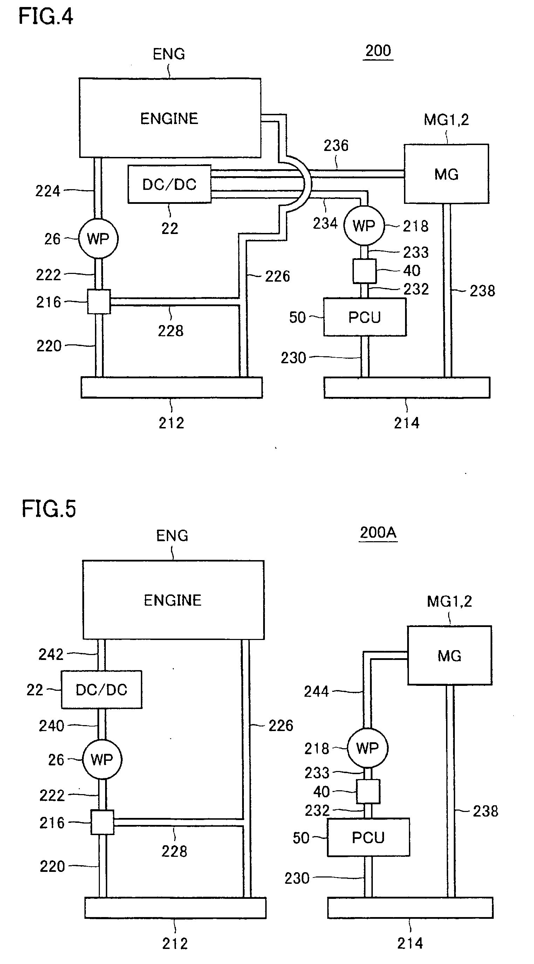

Fig. 4 is a diagram for illustrating a cooling system of hybrid vehicle 100 shown in Fig. 1. Referring to Fig. 4, this cooling system 200 includes engine ENG, DC/DC converter 22, motor generators MG1, MG2, PCU 50, water pumps 26, 218, radiators 212, 214, a thermostat 216, HV reservoir tank 40, and cooling water paths 220-238.

Cooling water path 220 is provided between the output port of radiator 212 and thermostat 216, and cooling water path 222 is provided between thermostat 216 and water pump 26. Cooling water path 224 is provided between water pump 26 and engine ENG, and cooling water path 226 is provided between engine ENG and the input port of radiator 212. Furthermore, cooling water path 228 for bypassing is provided between thermostat 216 and cooling water path 226.

Cooling water path 230 is provided between the output port of radiator 214 and PCU 50, and cooling water path 232 is provided between PCU 50 and HV reservoir tank 40 and cooling water path 233 is provided between HV reservoir tank 40 and water pump 218. Cooling water path 234 is provided between water pump 218 and DC/DC converter 22, and cooling water path 236 is provided between DC/DC converter 22 and motor generators MG1, MG2. Furthermore, cooling water path 238 is provided between motor generators MG1, MG2 and the input port of radiator 214.

In cooling system 200, the cooling system of engine ENG and the cooling system of PCU 50 and motor generators MG1, MG2 (hereinafter referred to as "cooling system of the electrical system") are separated from each other. DC/DC converter 22 is incorporated in the latter cooling system to be cooled.

Radiator 212 cools the cooling water of engine ENG and radiator 214 cools the cooling water of the cooling system of the electrical system. Water pump 26 functions to circulate the cooling water of engine ENG, and water pump 218 functions to circulate the cooling water of the cooling system of the electrical system. Thermostat 216 causes the cooling water from radiator 212 to flow through cooling water path 228 when the temperature of engine ENG is low.

As described above, in the first embodiment, DC/DC converter 22 is disposed in the vacant space where the alternator which becomes unnecessary by disposing motor generator MG1 has been supposed to be located. This allows DC/DC converter 22 to be disposed separately from PCU 50 without additionally providing a space for mounting DC/DC converter 22.

Therefore, according to the first embodiment, PCU 50 can be reduced in size without deteriorating the mountability of engine ENG to be equipped with DC/DC converter 22. Since DC/DC converter 22 is placed separately from PCU 50, only DC/DC converter 22 can be repaired or replaced without an entire replacement of PCU 50 in the event of failure of DC/DC converter 22. Furthermore, DC/DC converter 22 is placed separately from PCU 50 to thereby allow the increase in the type of PCU 50 to be restrained. In addition, since DC/DC converter 22 is disposed on the relatively upper portion of engine ENG, the reliability of preventing water from spattering on DC/DC converter 22 can be ensured.

### [Second Embodiment]

The second embodiment is different in the configuration of the cooling system from the first embodiment. The overall configuration of the hybrid vehicle and the mounting position of DC/DC converter 22 according to the second embodiment are the same as those in the case of hybrid vehicle 100 according to the first embodiment.

Fig. 5 is a diagram for illustrating a cooling system of the hybrid vehicle according to the second embodiment of the present invention. Referring to Fig. 5, this cooling system 200A includes cooling water paths 240, 242, 244 in place of cooling water paths 224, 234, 236 in the configuration of cooling system 200 according to the first embodiment shown in Fig. 4.

Cooling water path 240 is provided between water pump 26 and DC/DC converter 22, and cooling water path 242 is provided between DC/DC converter 22 and engine ENG. Furthermore, cooling water path 244 is provided between water pump 218 and motor generators MG1, MG2.

In cooling system 200A, DC/DC converter 22 is incorporated in the cooling system of engine ENG to be cooled. In this case, DC/DC converter 22 is disposed in engine ENG, which allows cooling water paths 240, 242 connected to DC/DC converter 22 to be reduced in length.

Furthermore, since DC/DC converter 22 is disposed, as seen from radiator 212, upstream of engine ENG, the cooling water cooled by radiator 212 is supplied to DC/DC converter 22 before receiving heat from engine ENG having a large heat capacity.

As described above, according to the second embodiment, DC/DC converter 22 disposed in engine ENG is cooled using the cooling water of engine ENG, which eliminates the need to provide the cooling water path from the cooling system of the electrical system to DC/DC converter 22. This allows cost reduction and space saving to be achieved accordingly.

DC/DC converter 22 is disposed in proximity to the side opposite to transaxle TA across cylinder block 112 (the side opposite to the side from which the output of engine ENG is provided), and in the position where the cooling water of engine ENG can be readily removed, with the result that the cooling system can be readily constructed. Furthermore, DC/DC converter 22 is disposed, as seen from radiator 212, upstream of engine ENG, which allows the coolness of DC/DC converter 22 to be ensured.

### [Third Embodiment]

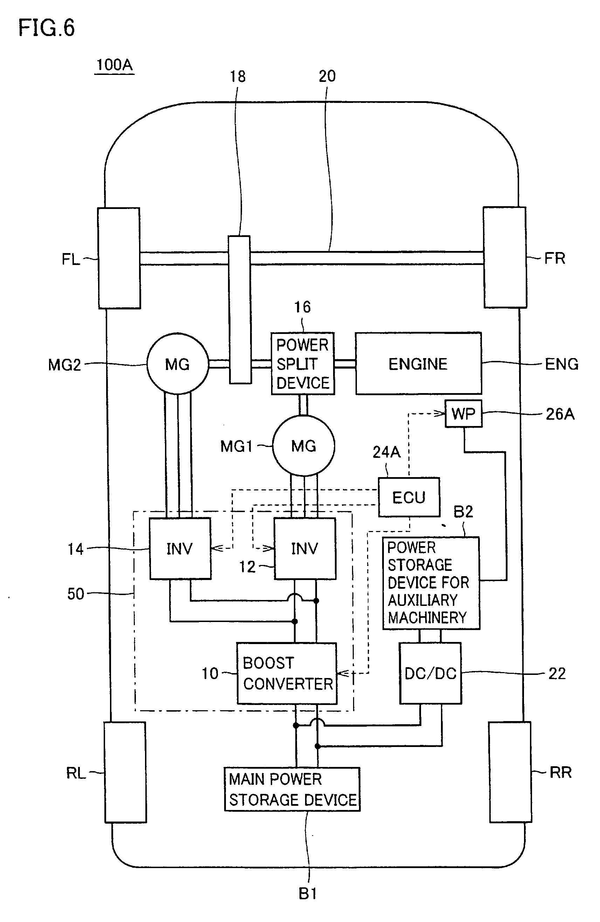

Fig. 6 is a functional block diagram schematically showing the configuration of the hybrid vehicle according to a third embodiment of the present invention. Referring to Fig. 6, a hybrid vehicle 100A includes an electric-powered water pump 26A and an ECU 24A in place of water pump 26 and ECU 24, respectively, in the configuration of hybrid vehicle 100 according to the first embodiment shown in Fig. 1.

Electric-powered water pump 26A receives electric power from power storage device B2 for auxiliary machinery and operates based on the drive instruction from ECU 24A. Electric-powered water pump 26A circulates the cooling water of the cooling system of engine ENG.

ECU 24A generates a control signal for driving electric-powered water pump 26A and outputs the generated control signal to electric-powered water pump 26A. It is to be noted that other functions of ECU 24A are the same as those of ECU 24 in the first embodiment.

In addition, other configurations of hybrid vehicle 100A are the same as those of hybrid vehicle 100 according to the first embodiment shown in Fig. 1.

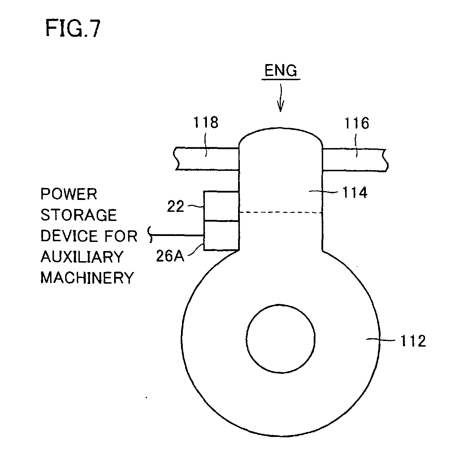

Fig. 7 is a front view of engine ENG shown in Fig. 6. It is to be noted that Fig. 7 corresponds to Fig. 2 described in the first embodiment. Referring to Fig. 7, electric-powered water pump 26A is disposed in the same position as where water pump 26 is disposed in the first embodiment. As in the first embodiment, DC/DC converter 22 is also disposed in the vicinity of electric-powered water pump 26A and in the vacant space where the alternator which becomes unnecessary has been supposed to be located.

In the third embodiment, electric-powered water pump 26A is operated by the electric power from power storage device B2 for auxiliary machinery, which eliminates the need of belt 122 required for driving water pump 26 in the first embodiment. Thus, there is no load of the water pump included in the load of engine ENG, with the result that engine friction is reduced.

As described above, according to the third embodiment, there is no need to use the output of engine ENG to mechanically drive the water pump, which can eliminate the need of the belt for transmitting the output of engine ENG to the water pump. In addition, the reduction in engine friction improves the fuel efficiency of engine ENG.

### [Fourth Embodiment]

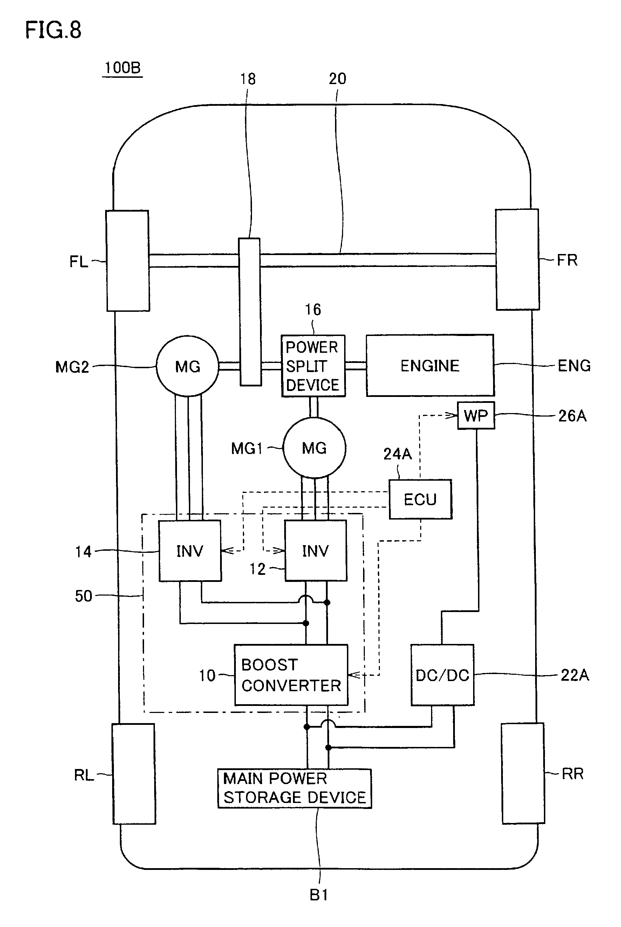

Fig. 8 is a functional block diagram schematically showing the configuration of the hybrid vehicle according to a fourth embodiment of the present invention. Referring to Fig. 8, a hybrid vehicle 100B includes a DC/DC converter 22A in place of DC/DC converter 22 in the configuration of hybrid vehicle 100A according to the third embodiment shown in Fig. 6.

DC/DC converter 22A lowers the DC voltage received from main power storage device B 1 or boost converter 10 to the voltage level of the auxiliary machinery system, and outputs it to electric-powered water pump 26A.

It is to be noted that other configurations of hybrid vehicle 100B are the same as those of hybrid vehicle 100A according to the third embodiment shown in Fig. 6.

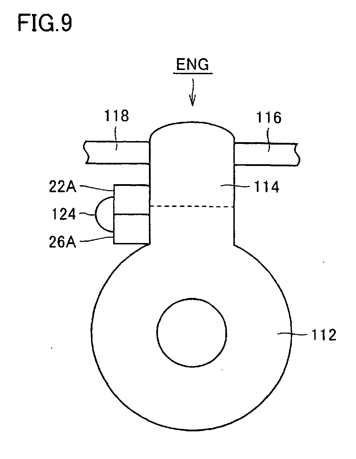

Fig. 9 is a front view of engine ENG shown in Fig. 8. It is to be noted that Fig. 9 also corresponds to Fig. 2 described in the first embodiment. Referring to Fig. 9, as in the case of DC/DC converter 22 in the first to third embodiments, DC/DC converter 22A is disposed in the vicinity of electric-powered water pump 26A and in the vacant space where the alternator which becomes unnecessary has been supposed to be located. DC/DC converter 22A supplies electric power through an electric power line 124 to electric-powered water pump 26A.

In the fourth embodiment, electric-powered water pump 26A receives the electric power from DC/DC converter 22A disposed in the vicinity thereof Therefore, according to the fourth embodiment, electric power line 124 between electric-powered water pump 26A and DC/DC converter 22A can be reduced in length.

According to the fourth embodiment, the output voltage of DC/DC converter 22A is raised to thereby allow electric-powered water pump 26A to be reduced in size and improved in efficiency.

### [Fifth Embodiment]

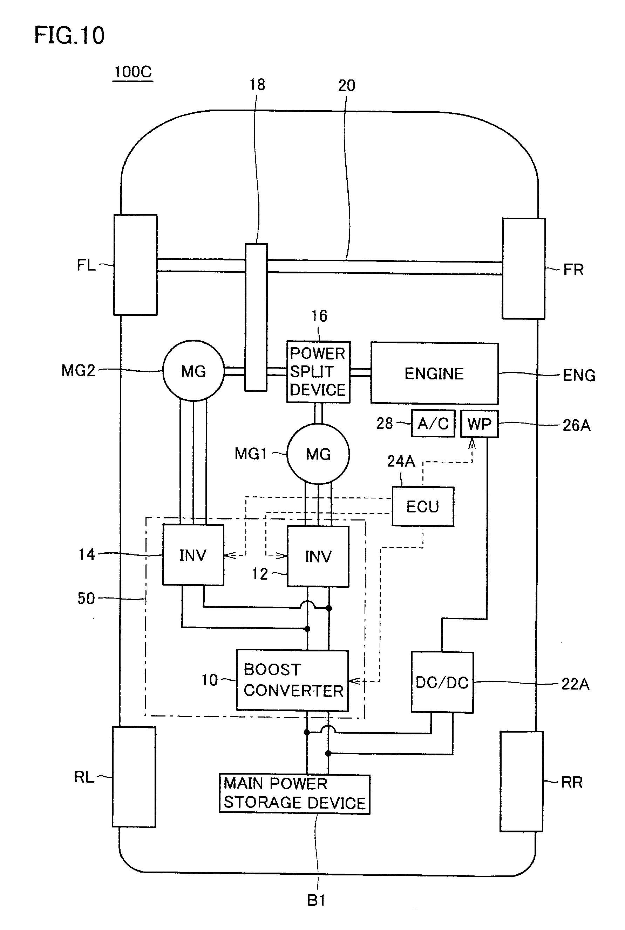

Fig. 10 is a functional block diagram schematically showing the configuration of the hybrid vehicle according to a fifth embodiment of the present invention. Referring to Fig. 10, a hybrid vehicle 100C further includes an air-conditioner compressor 28 in the configuration of hybrid vehicle 100B according to the fourth embodiment shown in Fig. 8.

Air-conditioner compressor 28 functions as a compressor used for the air conditioner installed in this hybrid vehicle 100C. Air-conditioner compressor 28 is driven by engine ENG in the operation of engine ENG.

It is to be noted that other configurations of hybrid vehicle 100C are the same as those of hybrid vehicle 100B according to the fourth embodiment shown in Fig. 8.

In this hybrid vehicle 100C, air-conditioner compressor 28 is disposed in engine ENG and driven by engine ENG. DC/DC converter 22A is cooled by a refrigerant of the air conditioner.

In other words, DC/DC converter 22A and air-conditioner compressor 28 are both disposed in engine ENG. The refrigerant of the air conditioner which is flowed through air-conditioner compressor 28 is lower in temperature than the cooling water of engine ENG and the cooling water of the cooling system of the electrical system. Consequently, the refrigerant of the air conditioner is used for cooling DC/DC converter 22A.

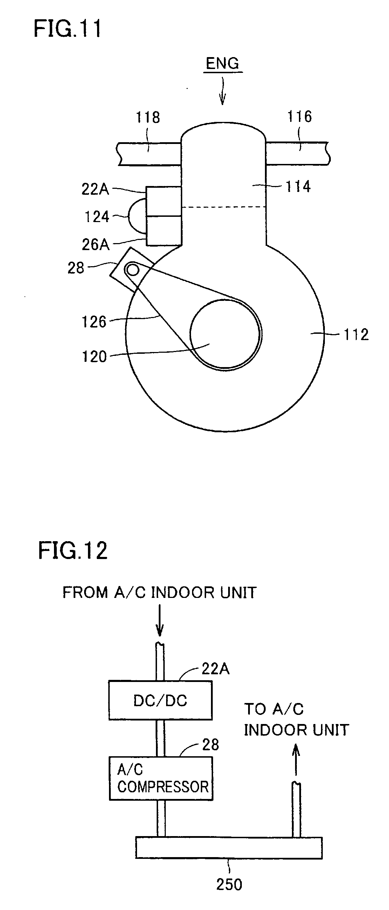

Fig. 11 is a front view of engine ENG shown in Fig. 10. It is to be noted that Fig. 11 also corresponds to Fig. 2 described in the first embodiment. Referring to Fig. 11, air-conditioner compressor 28 is disposed in the vicinity of DC/DC converter 22A and linked via a belt 126 to pulley 120 which rotates in conjunction with the crankshaft of engine ENG. Air-conditioner compressor 28 uses the output of engine ENG for operation.

In other words, in the conventional vehicle equipped with the air-conditioner compressor, the alternator is disposed in the vicinity of the air-conditioner compressor and, together with the air-conditioner compressor, uses the output of the engine for operation. In contrast, DC/DC converter 22A is disposed in the vacant space, in the vicinity of air-conditioner compressor 28, where the alternator has been supposed to be located.

In Fig. 11, air-conditioner compressor 28 is disposed in the vicinity below electric-powered water pump 26A disposed in the vicinity of DC/DC converter 22A, but air-conditioner compressor 28 may be disposed above DC/DC converter 22A or adjacent to DC/DC converter 22A along the direction of the crankshaft.

Fig. 12 shows a portion of a refrigerant system of the air conditioner mounted in hybrid vehicle 100C shown in Fig. 10. Referring to Fig. 12, this refrigerant system includes DC/DC converter 22A, air-conditioner compressor 28 and a condenser 250.

DC/DC converter 22A receives the air-conditioner refrigerant from the indoor unit of the air conditioner and is cooled by the received air-conditioner refrigerant. DC/DC converter 22A then outputs the air-conditioner refrigerant to air-conditioner compressor 28 disposed in the vicinity thereof. Air-conditioner compressor 28 receives the air-conditioner refrigerant from DC/DC converter 22A and compresses the received refrigerant to output it to condenser 250. Condenser 250 cools and condenses the air-conditioner refrigerant compressed by air-conditioner compressor 28, and supplies it again to the indoor unit of the air conditioner.

As described above, according to the fifth embodiment, DC/DC converter 22A and air-conditioner compressor 28 through which the refrigerant of the air conditioner flows are both disposed in engine ENG, with the result that the refrigerant of the air conditioner having high cooling performance can be readily introduced into DC/DC converter 22A.

### [Sixth Embodiment]

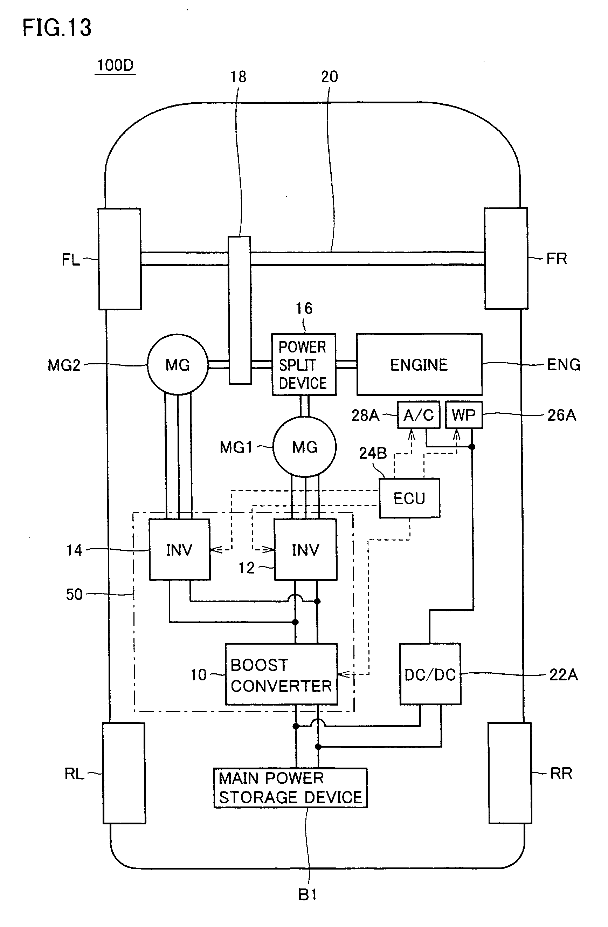

Fig. 13 is a functional block diagram schematically showing the configuration of the hybrid vehicle according to a sixth embodiment of the present invention. Referring to Fig. 13, a hybrid vehicle 100D includes an electric-powered air-conditioner compressor 28A and an ECU 24B in place of air-conditioner compressor 28 and ECU 24A, respectively, in the configuration of hybrid vehicle 100C according to the fifth embodiment shown in Fig. 10.

Electric-powered air-conditioner compressor 28A receives electric power from DC/DC converter 22A and operates based on the drive instruction from ECU 24B.

ECU 24B generates a control signal for driving electric-powered air-conditioner compressor 28A and outputs the generated control signal to electric-powered air-conditioner compressor 28A. It is to be noted that other functions of ECU 24B are the same as those of ECU 24A in the third to fifth embodiments.

Other configurations of hybrid vehicle 100D are also the same as those of hybrid vehicle 100C according to the fifth embodiment shown in Fig. 10.

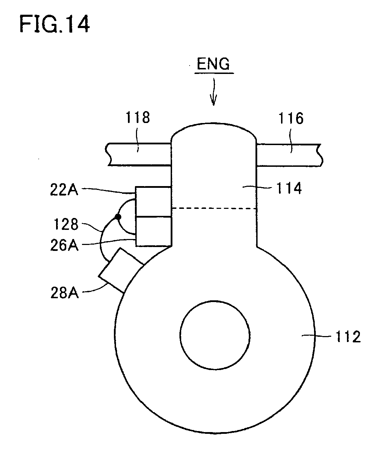

Fig. 14 is a front view of engine ENG shown in Fig. 13. It is to be noted that Fig. 14 also corresponds to Fig. 2 described in the first embodiment. Referring to Fig. 14, electric-powered air-conditioner compressor 28A is disposed in the same position as where air-conditioner compressor 28 is disposed in the fifth embodiment. DC/DC converter 22A and electric-powered water pump 26A are also disposed in the same position as in the fifth embodiment.

In the sixth embodiment, electric-powered air-conditioner compressor 28A is operated by the electric power received through an electric power line 128 from DC/DC converter 22A, which eliminates the need of belt 126 required for driving air-conditioner compressor 28 in the fifth embodiment. Thus, there is no load of the compressor included in the load of engine ENG, with the result that engine friction is reduced.

As described above, according to the sixth embodiment, there is no need to use the output of engine ENG to mechanically drive the air-conditioner compressor, which can eliminate the need of the belt for transmitting the output of engine ENG to the air-conditioner compressor. In addition, the reduction in engine friction improves the fuel efficiency of engine ENG.

In the sixth embodiment, electric-powered air-conditioner compressor 28A receives electric power from DC/DC converter 22A disposed in the vicinity thereof. Therefore, according to the sixth embodiment, electric power line 128 between electric-powered air-conditioner compressor 28A and DC/DC converter 22A can be reduced in length.

According to the sixth embodiment, the output voltage of DC/DC converter 22A is raised to thereby allow electric-powered air-conditioner compressor 28A to be reduced in size and improved in efficiency.

While DC/DC converters 22, 22A are disposed in engine ENG separately from PCU 50 in the above-described embodiments, it may be considered that the DC/DC converter is placed within the pack of main power storage device B1 (within the battery pack) to be air-cooled. However, in the case where the DC/DC converter is placed within the battery pack for air-cooling, the coolness of the DC/DC converter may be influenced by the outside air temperature. Consequently, in consideration of the coolness of the DC/DC converter, it is preferable that the DC/DC converter is disposed in the engine as in the above-described embodiments.

Although the hybrid vehicle using power split device 16 has been described in each of the above-described first to sixth embodiments, the present invention is not limited to the hybrid vehicle having such system configuration. The present invention is applicable to a hybrid vehicle in which the DC/DC converter is disposed in the vacant space where the alternator which becomes unnecessary by disposing a motor generator has been supposed to be located, and also applicable to a parallel-type or series-type hybrid vehicle.

In the above description, engine ENG corresponds to the "internal combustion engine" of the present invention, and motor generator MG 1 corresponds to the "motor generator" of the present invention. Main power storage device B 1 corresponds to the "power storage device" of the present invention, and DC/DC converters 22, 22A each correspond to the "converter" of the present invention. Furthermore, electric-powered water pump 26A corresponds to the "electric-powered pump" of the present invention.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

## Claims

1. A hybrid vehicle (100) comprising:
an internal combustion engine (ENG);
a motor generator (MG1) having a rotation shaft mechanically linked to an output shaft of said internal combustion engine;
a power control unit (50) controlling electric power transmitted and received between a power storage device (B1) and said motor generator (MG1); and
a converter (22) converting a voltage level of the electric power supplied from said power storage device (B1) for output to on-vehicle auxiliary machinery;
**characterised in that**
said converter (22) is disposed in proximity to the side of the engine opposite to the side at which the output of the engine is provided and above the crankshaft of the engine in the vertical direction of the vehicle body.

2. The hybrid vehicle according to claim 1, wherein said converter (22) is cooled by a refrigerant cooling said internal combustion engine. (ENG).

3. The hybrid vehicle according to claim 2, wherein said converter is disposed, as seen from a radiator (212) cooling said refrigerant, upstream of said internal combustion engine (ENG).

4. The hybrid vehicle according to claim 2, further comprising an electric-powered pump (26A) mounted to said internal combustion engine (ENG) and circulating said refrigerant in a cooling system through which said refrigerant flows.

5. The hybrid vehicle according to claim 4, wherein said electric-powered pump (26A) is driven by the electric power output from said converter (22).

6. The hybrid vehicle according to claim 1, further comprising a compressor (28) for an air conditioner, mounted to said internal combustion engine(ENG), wherein said converter (22A) is cooled by a refrigerant of the air conditioner.

7. The hybrid vehicle according to claim 6, wherein said compressor (28A) for the air conditioner includes an electric-powered compressor.

8. The hybrid vehicle according to claim 7, wherein said compressor (28A) for the air conditioner is driven by the electric power output from said converter (22A).

## Patentansprüche

1. Hybridfahrzeug (100) mit:
einer Maschine (ENG) mit interner Verbrennung;
einem Motorgenerator (MG1) mit einer drehenden Welle, die mechanisch mit einer Abtriebswelle der Maschine mit interner Verbrennung verbunden ist;
einer Leistungssteuereinheit (50), die elektrischen Strom steuert, der zwischen einer Stromspeichereinrichtung (B1) und dem Motorgenerator (MG1) übertragen und empfangen wird; und
einem Konverter (22), der einen Spannungspegel des elektrischen Stroms umwandelt, der von der Stromspeichereinrichtung (B1) zur Abgabe an Hilfseinrichtungen im Fahrzeug bereitgestellt wird;
**dadurch gekennzeichnet, dass**
der Konverter (22) in der Nähe der Seite der Maschine gegenüber einer Seite, an der die Leistung der Maschine bereitgestellt wird, und oberhalb der Kurbelwelle der Maschine in der senkrechten Richtung der Fahrzeugkarosserie angeordnet ist.

2. Hybridfahrzeug nach Anspruch 1, wobei der Konverter (22) durch ein Kühlmittel gekühlt wird, das die Maschine (ENG) mit interner Verbrennung kühlt.

3. Hybridfahrzeug nach Anspruch 2, wobei der Konverter von einem das Kühlmittel kühlenden Kühler (212) aus gesehen stromauf der Maschine (ENG) mit interner Verbrennung angeordnet ist.

4. Hybridfahrzeug nach Anspruch 2, weiter mit einer elektrisch betriebenen Pumpe (26A), die an der Brennkraftmaschine (ENG) angebracht ist und das Kühlmittel in einem Kühlsystem umwälzt, durch welches das Kühlmittel fließt.

5. Hybridfahrzeug nach Anspruch 4, wobei die elektrisch betriebene Pumpe (26A) durch den elektrischen Strom betrieben wird, der vom Konverter (22) abgegeben wird.

6. Hybridfahrzeug nach Anspruch 1, weiter mit einem an der Maschine (ENG) mit interner Verbrennung angebrachten Kompressor (28) für eine Klimaanlage, wobei
der Konverter (22A) durch ein Kühlmittel der Klimaanlage gekühlt wird.

7. Hybridfahrzeug nach Anspruch 6, wobei der Kompressor (28A) für die Klimaanlage einen elektrisch betriebenen Kompressor umfasst.

8. Hybridfahrzeug nach Anspruch 7, wobei der Kompressor (28A) für die Klimaanlage durch den elektrischen Strom betrieben wird, der vom Konverter (22A) abgegeben wird.

## Revendications

1. Véhicule (100) hybride comprenant :
un moteur (ENG) à combustion interne ;
un moteur-générateur (MG1) ayant un arbre de rotation relié mécaniquement à un arbre de sortie dudit moteur à combustion interne ;
une unité (50) de commande d'énergie commandant l'énergie électrique transmise et reçue entre un dispositif (B1) de stockage d'énergie et ledit moteur-générateur (MG1) ; et
un convertisseur (22) convertissant un niveau de tension de l'énergie électrique fournie à partir dudit dispositif (B1) de stockage d'énergie pour le délivrer en sortie aux machines auxiliaires installées dans le véhicule ;
**caractérisé en ce que**
ledit convertisseur (22) est disposé à proximité du coté du moteur opposé au coté sur lequel la sortie du moteur est fournie et au-dessus du vilebrequin du moteur dans la direction verticale de la carrosserie du véhicule.

2. Véhicule hybride selon la revendication 1, dans lequel ledit convertisseur (22) est refroidi par un fluide frigorigène refroidissant ledit moteur (ENG) à combustion interne.

3. Véhicule hybride selon la revendication 2, dans lequel ledit convertisseur est disposé, vu d'un radiateur (212) refroidissant ledit fluide frigorigène, en amont dudit moteur (ENG) à combustion interne.

4. Véhicule hybride selon la revendication 2, comprenant en outre une pompe (26A) électrique montée sur ledit moteur (ENG) à combustion interne et faisant circuler ledit fluide frigorigène dans un système de refroidissement à travers lequel ledit fluide frigorigène s'écoule.

5. Véhicule hybride selon la revendication 4, dans lequel ladite pompe (26A) électrique est entraînée par l'énergie électrique délivrée en sortie dudit convertisseur (22) .

6. Véhicule hybride selon la revendication 1, comprenant en outre un compresseur (28) pour un climatiseur, monté sur ledit moteur (ENG) à combustion interne, dans lequel ledit convertisseur (22A) est refroidi par un fluide frigorigène du climatiseur.

7. Véhicule hybride selon la revendication 6, dans lequel ledit compresseur (28A) pour le climatiseur comporte un compresseur électrique.

8. Véhicule hybride selon la revendication 7, dans lequel ledit compresseur (28A) pour le climatiseur est entraîné par l'énergie électrique délivrée en sortie dudit convertisseur (22A).
